# EUROPEAN PATENT APPLICATION

(11) **EP 3 845 847 A1**
(43) Date of publication of application: **07.07.2021**
(21) Application number: 20213477.1
(22) Date of filing: 11.12.2020
(51) Int. Cl.: F25J 3/04

(54) **A METHOD AND APPARATUS FOR IMPROVING EFFICIENCY OF A FRONT-END PURIFICATION UNIT OF AN AIR SEPARATION PLANT**

(30) Priority: 30.12.2019 US 201916731027
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: KONG, Paul, Houston, Texas 77024 (US); PHAM-HUY, Minh, Houston, Texas 77024 (US); YIP, Wendy, Houston, Texas 77024 (US)
(74) Representative: Air Liquide

(57) **Abstract**

A method and apparatus for reducing heat bumps following regeneration of adsorbers in an air separation unit is provided utilizing the two waste streams available at very different temperatures from the two main exchangers which are low-pressure and high-pressure core exchangers (20,30) for regeneration of the front-end purification adsorbers in the air separation unit (ASU) to reduce its energy consumption without compromising the stability of process.

## Description

The present invention generally relates to an apparatus and process for improving the operation of a front-end purification unit of an air separation plant during the regeneration cycle. More particularly, the present invention improves the energy consumption without compromising the stability of the process and apparatus.

In a conventional ASU where there is only one main exchanger and waste nitrogen is available as a single stream, this waste nitrogen stream is used for heating and cooling the front-end purification (FEP) unit.

In a more modern ASU design for internal product compression process, the cold box main exchanger is sometimes split into two main exchangers (high-pressure cores and low-pressure cores). High-pressure incoming air and high pressure outgoing product streams are heat exchanged in high-pressure cores while low-pressure incoming air and low pressure outgoing product streams are heat exchanged in low-pressure cores. Generally any stream over a given pressure is sent to the higher pressure heat exchanger whilst at least certain streams under the given pressure are sent to the lower pressure heat exchanger. The waste nitrogen (WN) is usually split between the two main exchangers in order to achieve the maximum thermal efficiency. High pressure incoming air is usually at higher temperature than low pressure incoming air, therefore, the two waste nitrogen streams exit the two exchangers at very different temperatures (33°C from high cores vs. 10°C from low cores in this particular reference case).

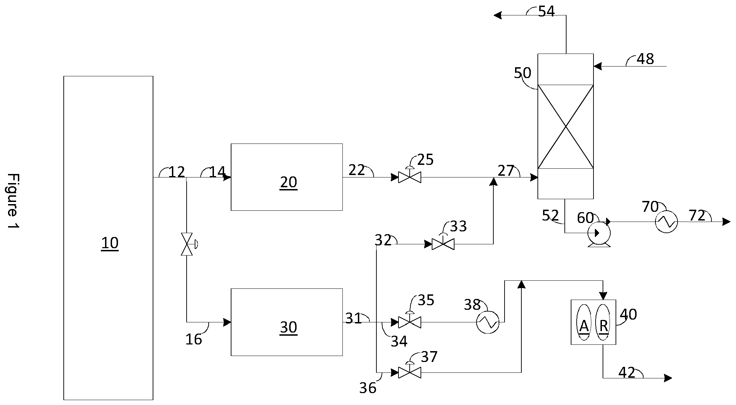

FIG. 1 provides a representation of a process not covered by the invention. Referring to FIG. 1, waste nitrogen (WN) 12 is withdrawn from the distillation column system 10 and split into two streams. First stream 14 is introduced into higher-pressure heat exchanger 20, where it exchanges heat with a high pressure incoming air stream (not shown), thereby producing a warmed first WN 22, which exits the warm end of the HP heat exchanger at a temperature of about 33°C.

Second stream 16 is introduced into lower-pressure heat exchanger 30, wherein the second stream 16 exchanges heat with a low-pressure incoming air stream (not shown), thereby producing warmed second WN 31, which exits the warm end of the LP heat exchanger at a temperature of about 10°C.

The regeneration cycle of FEP unit 40 includes both a heating and a cooling phase. During the heating phase, valve 37 is closed and valve 35 is open. Warmed second WN flows through line 34 and is heated in waste nitrogen heater 38 to a suitable temperature for regenerating the FEP unit 40. Once adsorber R of FEP unit 40 is sufficiently regenerated, FEP unit 40 must be cooled close to the adsorption temperature prior to switching to its adsorption cycle to prevent heat bumps to the distillation column system 10. During this cooling phase, valve 35 is closed and valve 37 is opened to allow second WN to flow via line 36. Once the adsorber R of FEP unit 40 is at the proper temperature, then valve 37 is closed and the adsorber R that is presently in the regeneration cycle is switched to an adsorption cycle A, as is well known in the art.

First WN 22 is combined with a third fraction 32 of the second WN stream by opening valve 33 to produce chilling nitrogen stream 27. The chilling nitrogen stream 27 is then introduced to chiller water tower 50, wherein the chilling nitrogen stream 27 is used to chill warmed chilling water 48, thereby producing cooled water 52, which is then pressurized in pump 60 and further cooled in mechanical refrigeration unit 70 to produce chilled water 72. Those of ordinary skill in the art will recognize that chilled water 72 is then typically used in a chilled water after-cooler that is located upstream of the FEP unit 40 to cool the incoming air after compression in a main air compressor (not shown). Warmed nitrogen 54 is withdrawn from the top of chiller water tower 50 and vented to the atmosphere.

The embodiment of Figure 1 therefore cools the adsorber R of the FEP unit 40 to approximately 10°C, therefore, reduces heat bump; however, a large capacity nitrogen heater 38 and more energy are required to regenerate the adsorber R of the FEP unit 40 during the heating phase.

Therefore, it would be desirable to have an improved apparatus and method that avoids these process disturbances while minimizing energy consumption and operating in an overall more efficient manner.

The present invention is directed to a method and apparatus that satisfies at least one of these needs. Certain embodiments of the current invention utilize the two waste nitrogen streams available at very different temperatures from the two main exchangers (low-pressure and high-pressure core exchangers) for regeneration of the front-end purification adsorbers in the air separation unit (ASU) to reduce its energy consumption without compromising the stability of process. Certain embodiments help to eliminate/minimize high air temperature disturbance (heat bump) for the process downstream of the front-end purification unit during the transition from offline to online since certain embodiments of the invention use the colder waste nitrogen for cooling, thereby enabling the adsorber to be cooled close to the adsorption temperature prior to being put online (i.e., switched back to the adsorption cycle). As used herein, "offline" is synonymous with the regeneration cycle while "online" is synonymous with the adsorption cycle.

Certain embodiments of the invention propose to use the higher temperature waste nitrogen stream from high-pressure exchanger core as the regeneration gas for adsorber heating, and then switch to the lower temperature waste nitrogen from the low-pressure cores as the regeneration gas for adsorber cooling.

In one embodiment of the present invention, the first waste nitrogen that is heated in the higher-pressure heat exchanger is used to regenerate the adsorber R during the heating phase, while the second waste nitrogen that is heated in the lower pressure heat exchanger is used to regenerate the adsorber R during the cooling phase. Since the first waste nitrogen is at a higher temperature as compared to the second waste nitrogen, the waste nitrogen heater requires less heat duty to bring the waste nitrogen stream to the appropriate temperature for the heating phase of the regeneration cycle (approximately a 15% reduction in energy consumption as compared to FIG. 1).

This also reduces the power consumption in the mechanical refrigeration unit during the heating step since chilling nitrogen stream 27 temperature is lower due to portion of LP WN 32 being increased, and therefore, chilled water 52 temperature is lower. Moreover, the waste nitrogen heater size is reduced while also reducing/eliminating the high air temperature disturbance (i.e., heat bump) to the process downstream of the FEP unit during transition from regeneration to adsorption, since using colder waste nitrogen for cooling enables the adsorber to be cooled close to the adsorption temperature prior to being switched back to adsorption. This means that the dry air temperature exiting the adsorber right after switchover will stay essentially constant.

In one embodiment, the invention can include a method for reducing heat bumps following regeneration of adsorbers in an air separation unit is provided. In one embodiment, the air separation unit comprises a front-end purification unit, a main air compressor, a lower-pressure heat exchanger, a higher-pressure heat exchanger, a distillation column system, a regeneration gas heater, wherein the front-end purification unit comprises a first adsorber and a second adsorber. In one embodiment, the method can include the steps of: regenerating the first adsorber while the second adsorber operates in an adsorption cycle, wherein the step of regenerating the first adsorber further comprises the steps of heating the first adsorber and then cooling the first adsorber, wherein during the step of heating the first adsorber, a first regeneration gas sourced from the distillation column system is warmed in the higher-pressure heat exchanger and is used to heat the first adsorber, wherein during the step of cooling the first adsorber, a second regeneration gas sourced from the distillation column system is warmed in the lower-pressure heat exchanger and is used to cool the first adsorber, wherein the first regeneration gas is warmed to a warmer temperature in the higher-pressure heat exchanger than the temperature to which the second regeneration gas iswarmed in the lower-pressure heat exchanger.

In optional embodiments of the method for reducing heat bumps following regeneration of the adsorbers:
- the first regeneration gas and the second regeneration gas are both waste nitrogen streams from distillation column system;
- the first regeneration gas is warmed to 33°C ± 5°C in the higher-pressure heat exchanger;
- the second regeneration gas is warmed to 10°C ± 5°C in the lower-pressure heat exchanger;
- during the step of heating the first adsorber, at least a portion of the second regeneration gas is sent to a chiller water tower to provide cooling to a water stream to produce a cooled water stream;
- the method can also include the step of pressurizing the cooled water stream in a pump and then cooling the cooled water stream to produce chilled water;
- the cooled water stream is cooled in a mechanical refrigeration unit;
- the chilled water is used to provide cooling to a compressed air stream after the compressed air stream is compressed in the main air compressor; and/or
- during the step of cooling the first adsorber, flow of the first refrigeration gas is stopped to the first adsorber and sent to a chiller water tower to provide cooling to a water stream to produce a cooled water stream.

In another embodiment, the method can include the steps of: providing a wet main air stream that was previously compressed in a main air compressor and then chilled in a direct-contact water tower; purifying the wet main air stream in the front-end purification unit to remove water and carbon dioxide to form a dry main air stream; further boosting a first portion of the dry main air stream in a booster air compressor to form a boosted air stream; cooling a second portion of the dry main air stream in the lower-pressure heat exchanger by indirect heat exchange to form a cooled air stream; cooling the boosted air stream in the higher-pressure heat exchanger by indirect heat exchange to form a cooled boosted air stream; introducing the cooled air stream and the cooled boosted air stream to the distillation column system under conditions effective for rectification of air into nitrogen and oxygen; withdrawing a first waste nitrogen gas and a second waste nitrogen gas from the distillation column system and warming said first waste nitrogen gas in higher-pressure heat exchanger and warming said second waste nitrogen gas in the lower-pressure heat exchanger; wherein each of the adsorbers of the front-end purification unit undergoes a processing cycle comprising a regeneration cycle and an adsorption cycle, wherein the regeneration cycle comprises a warming period and a cooling period, wherein during the warming period, the first waste nitrogen gas from the higher-pressure heat exchanger is further warmed in a regeneration heater prior to being introduced to the adsorber that is undergoing regeneration, wherein during the cooling period, flow of the first waste nitrogen gas to the adsorber undergoing regeneration is stopped and the second waste nitrogen gas from the lower-pressure heat exchanger is introduced to the adsorber that is undergoing regeneration until the adsorber undergoing regeneration reaches a targeted temperature, wherein the targeted temperature is at or above a temperature of the wet main air stream and below a temperature of the regeneration gas exiting a warm end of the higher-pressure heat exchanger.

In another embodiment, an apparatus for reducing heat bumps following regeneration of adsorbers in an air separation unit is provided. In a preferred embodiment, the apparatus can include: a main air compressor configured to compress an air stream to form a compressed main air stream; a front-end purification unit configured to purify the compressed main air stream of water and carbon dioxide to form a dry main air stream, wherein the front-end purification unit comprises two adsorbers, wherein each adsorber is configured to operate with an adsorption cycle and a regeneration cycle, wherein the regeneration cycle comprises a warming period and a cooling period; a lower-pressure main heat exchanger configured to cool a lower pressure dry main air stream to a cryogenic temperature suitable for rectification of air; a higher-pressure heat exchanger configured to cool a higher pressure dry main air stream to a cryogenic temperature suitable for rectification of air; a distillation column system configured to receive the lower pressure and the higher pressure dry main air streams from low-pressure and high-pressure main heat exchangers after cooling, wherein the distillation column system is configured to separate the lower pressure and the higher pressure dry main air streams into nitrogen and oxygen; a regeneration gas heater in fluid communication with a warm end of the higher-pressure heat exchanger and the front-end purification unit, wherein the regeneration gas heat is configured to heat a first waste nitrogen stream sourced from the distillation column system during the warming period of the regeneration cycle; and wherein a warm end of the lower-pressure heat exchanger is in fluid communication with the front-end purification unit, such that a second waste nitrogen stream is used during the cooling period of the regeneration cycle.

### Brief Description of the Drawings

These and other features, aspects, and advantages of the present invention will become better understood with regard to the following description, claims, and accompanying drawings. It is to be noted, however, that the drawings illustrate only several embodiments of the invention and are therefore not to be considered limiting of the invention's scope as it can admit to other equally effective embodiments.
FIG. 1 shows an embodiment of the prior art.
FIG. 2 shows an embodiment of the present invention.

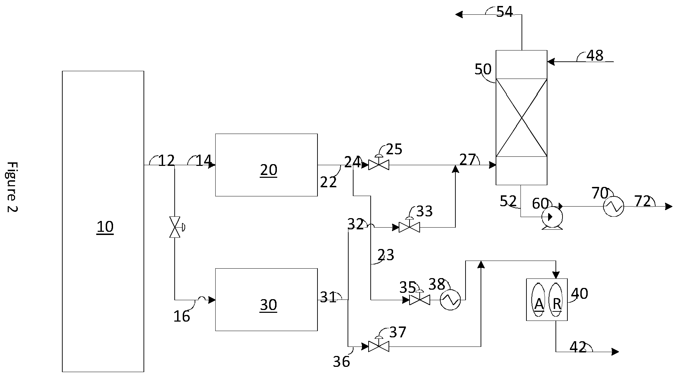

FIG. 2 represents a process flow diagram in accordance with an embodiment of the present invention. Referring to FIG. 2, waste nitrogen (WN) 12 is withdrawn from the distillation column system 10 and split into two streams. First stream 14 is introduced into higher-pressure heat exchanger 20, where it exchanges heat with a high-pressure incoming air stream (not shown); thereby producing a first warmed WN 22, which is at a temperature of about 33°C.

Second stream 16 is introduced into lower-pressure heat exchanger 30, wherein the second stream 16 exchanges heat with a low-pressure incoming air stream (not shown), thereby producing second warmed WN 31, which is at a temperature of about 10°C.

The regeneration cycle of adsorber R of FEP unit 40 includes both a heating and a cooling phase. During the heating phase, valve 37 is closed and valve 35 is open. First warmed WN flows through line 23 and is heated in waste nitrogen heater 38 to a suitable temperature for regenerating the adsorber R of FEP unit 40. Once adsorber R of FEP unit 40 is sufficiently regenerated, adsorber R of FEP unit 40 must be cooled prior to switching to its adsorption cycle to prevent heat bumps to the distillation column system 10. During this cooling phase, valve 35 is closed and valve 37 is opened to allow second warmed WN 31 to flow via line 36. Once the adsorber R of FEP unit 40 is at the proper temperature, then valve 37 is closed and the adsorber R that is presently in the regeneration cycle is switched to an adsorption cycle A via switching means not shown.

During the cooling phase of the regeneration cycle, valve 37 is opened, thereby increasing the flow of second warmed WN31 to flow via line 36, which thereby decreases flow of second warmed WN 31 via line 32. Furthermore, valve 35 is closed, which thereby increases the flow of first WN 24 through valve 25, wherein it is combined with a third fraction 32 of the second warmed WN stream to produce chilling nitrogen stream 27. The chilling nitrogen stream 27 is then introduced to water chiller tower 50, wherein the chilling nitrogen stream 27 is used to chill warmed chilling water 48, thereby producing cool water 52, which is then compressed in pump 60, further cooled in mechanical refrigeration unit 70 to produce chilled water 72. Those of ordinary skill in the art will recognize that chilled water 72 is then typically used in a chilled water after-cooler that is located upstream of the FEP unit 40 to cool the incoming air after compression in a main air compressor (not shown).

As compared to the prior art, during heating periods, flow of stream 24 is decreased and flow of 32 is increased, and since stream 32 is at a lower temperature this provides increased chilling to chilling water, thereby lowering the heat duty of mechanical refrigeration unit 70.

In one embodiment, a regeneration gas cooler is preferably added in parallel with the regeneration gas heater, such that the regeneration gas can be both cooled and heated to appropriate temperatures (i.e., an upper temperature hot enough for desorption and a lower temperature at or near the original adsorption temperature) without having to increase the pressure of the regeneration gas.

## Claims

1. A method for reducing heat bumps following regeneration of adsorbers in an air separation unit, wherein the air separation unit comprises a front-end purification unit (40), a main air compressor, a lower-pressure heat exchanger (30), a higher-pressure heat exchanger (20), a distillation column system (10), a regeneration gas heater (38), wherein the front-end purification unit comprises a first adsorber (A) and a second adsorber (R), the method comprising:
• regenerating the first adsorber while the second adsorber operates in an adsorption cycle, wherein the step of regenerating the first adsorber further comprises the steps of heating the first adsorber and then cooling the first adsorber,
wherein during the step of heating the first adsorber, a first regeneration gas (23) sourced from the distillation column system is warmed in the higher-pressure heat exchanger and is used to heat the first adsorber,
wherein during the step of cooling the first adsorber, a second regeneration gas (36) sourced from the distillation column system is warmed in the lower-pressure heat exchanger and is used to cool the first adsorber,
wherein the first regeneration gas is warmed to a warmer temperature in the higher-pressure heat exchanger than the temperature to which the second regeneration gas is warmed in the lower-pressure heat exchanger.

2. The method as claimed in Claim 1, wherein the first regeneration gas (23) and the second regeneration gas (36) are both waste nitrogen streams from distillation column system (10).

3. The method as claimed in Claim 1, wherein the first regeneration gas (23) is warmed to 33°C ± 5°C in the higher-pressure heat exchanger (20).

4. The method as claimed in Claim 1, wherein the second regeneration gas (36) is warmed to 10°C ± 5°C in the lower-pressure heat exchanger (30).

5. The method as claimed in Claim 1, wherein during the step of heating the first adsorber, at least a portion (32) of the second regeneration gas is sent to a chiller water tower (50) to provide cooling to a water stream to produce a cooled water stream.

6. The method as claimed in Claim 5, further comprising the step of pressurizing the cooled water stream in a pump (60) and then cooling the cooled water stream to produce chilled water.

7. The method as claimed in Claim 6, wherein the cooled water stream is cooled in a mechanical refrigeration unit.

8. The method as claimed in Claim 6, wherein the chilled water is used to provide cooling to a compressed air stream after the compressed air stream is compressed in the main air compressor.

9. The method as claimed in Claim 1, wherein during the step of cooling the first adsorber (A,R), flow of the first refrigeration gas is stopped to the first adsorber and sent to a chiller water tower (50) to provide cooling to a water stream to produce a cooled water stream.

10. The method as claimed in Claim 1 wherein the air separation unit comprises a chiller water tower, the method comprising the steps of:
• providing a wet main air stream that was previously compressed in the main air compressor and then chilled in a direct-contact water tower;
• purifying the wet main air stream in the front-end purification unit to remove water and carbon dioxide to form a dry main air stream;
• further boosting a first portion of the dry main air stream in a booster air compressor to form a boosted air stream;
• cooling a second portion of the dry main air stream in the lower-pressure heat exchanger (30) by indirect heat exchange to form a cooled air stream;
• cooling the boosted air stream in the higher-pressure heat exchanger (20) by indirect heat exchange to form a cooled boosted air stream;
• introducing the cooled air stream and the cooled boosted air stream to the distillation column system (10) under conditions effective for rectification of air into nitrogen and oxygen;
• withdrawing a first waste nitrogen gas and a second waste nitrogen gas from the distillation column system and warming said first waste nitrogen gas in higher-pressure heat exchanger and warming said second waste nitrogen gas in the lower-pressure heat exchanger;
wherein during the warming period, the first waste nitrogen gas from the higher-pressure heat exchanger is further warmed in a regeneration heater (38) prior to being introduced to the adsorber that is undergoing regeneration,
wherein during the cooling period, flow of the first waste nitrogen gas to the adsorber undergoing regeneration is stopped and the second waste nitrogen gas from the lower-pressure heat exchanger is introduced to the adsorber that is undergoing regeneration until the adsorber undergoing regeneration reaches a targeted temperature, wherein the targeted temperature is at or above a temperature of the wet main air stream and below a temperature of the regeneration gas exiting a warm end of the higher-pressure heat exchanger.

11. The method as claimed in Claim 10, wherein the first waste nitrogen gas is warmed to 33°C ± 5°C in the higher-pressure heat exchanger and the second waste nitrogen gas is warmed to 10°C ± 5°C in the lower-pressure heat exchanger.

12. The method as claimed in Claim 10, wherein during the step of heating the first adsorber, at least a portion of the second regeneration gas is sent to a chiller water tower (50) to provide cooling to a water stream to produce a cooled water stream.

13. The method as claimed in Claim 12, further comprising the step of pressurizing the cooled water stream in a pump (60) and then cooling the cooled water stream to produce chilled water.

14. The method as claimed in Claim 3, wherein the cooled water stream is cooled in a mechanical refrigeration unit.

15. An apparatus for reducing heat bumps following regeneration of adsorbers in an air separation unit, wherein the apparatus comprises:
• a main air compressor configured to compress an air stream to form a compressed main air stream;
• a front-end purification unit (40) configured to purify the compressed main air stream of water and carbon dioxide to form a dry main air stream, wherein the front-end purification unit comprises two adsorbers (A,R), wherein each adsorber is configured to operate with an adsorption cycle and a regeneration cycle, wherein the regeneration cycle comprises a warming period and a cooling period;
• a lower-pressure main heat exchanger (30) configured to cool a lower pressure dry main air stream to a cryogenic temperature suitable for rectification of air;
• a higher-pressure heat exchanger (20) configured to cool a higher pressure dry main air stream to a cryogenic temperature suitable for rectification of air;
• a distillation column system (10) configured to receive the lower pressure and the higher pressure dry main air streams from low-pressure and high-pressure main heat exchangers after cooling, wherein the distillation column system is configured to separate the lower pressure and the higher pressure dry main air streams into nitrogen and oxygen;
• a regeneration gas heater (38) in fluid communication with a warm end of the higher-pressure heat exchanger and the front-end purification unit, wherein the regeneration gas heater is configured to heat a first waste nitrogen stream (23) sourced from the distillation column system during the warming period of the regeneration cycle; and
wherein a warm end of the lower-pressure heat exchanger is in fluid communication with the front-end purification unit, such that a second waste nitrogen stream is used during the cooling period of the regeneration cycle.
